# EUROPÄISCHE PATENTSCHRIFT

(11) **EP 1 162 710 B1**
(45) Veröffentlichungstag und Bekanntmachung des Hinweises auf die Patenterteilung: **12.11.2003**
(21) Anmeldenummer: 01108567.7
(22) Anmeldetag: 05.04.2001
(51) Int. Cl.: H02G 3/22

(54) **Durchführeinrichtung für eine Leitung**
Leadthrough arrangement for a conduit
Dispositif de traversée pour une canalisation

(30) Priorität: 08.06.2000 DE 20015584 U
(43) Veröffentlichungstag der Anmeldung: 12.12.2001
(73) Patentinhaber: Eisenhauer, Michael, 32699 Extertal (DE)
(72) Erfinder: Eisenhauer, Michael, 32699 Extertal (DE)
(74) Vertreter: Specht, Peter, Dipl.-Phys.

(56) Entgegenhaltungen:
- EP-A- 0 275 113
- EP-A- 0 318 019
- DE-A- 3 702 443
- GB-A- 2 150 650

## Beschreibung

Die vorliegende Erfindung betrifft eine Durchführeinrichtung für eine Leitung gemäß dem Oberbegriff des Anspruchs 1.

GB-A-2 150 650 offenbart eine solche Durchführeinrichtung.

Aus isolierungstechnischen Gründen werden im Trockenbau Dämmstoffe, wie Glas- oder Mineralwolle, zumindest auf einer Seite mit einer Dampfsperre belegt. Diese kann aus einer aufkaschierten Kunststoff- oder Aluminiumfolie bestehen. Bekannt ist es aber auch, die Dampfsperre nachträglich aufzubringen, d.h. unmittelbar nach dem Verlegen des Dämmstoffes.

Dabei kommt solchen Dampfsperren deshalb eine besondere Bedeutung zu, weil verhindert werden soll, dass bei einer Taupunktunterschreitung kondensierende Feuchtigkeit der Luft sich in dem Dämmstoff niederschlägt und diesen dauerhaft schädigt bzw. die Dämmwirkung erheblich reduziert.

Dabei ist wesentlich, dass die Dampfsperre ununterbrochen flächig vorliegt, dass also an keiner Stelle die Möglichkeit besteht, dass Feuchtigkeit eindringt.

Probleme ergeben sich allerdings bislang dadurch, dass notwendige Installationsleitungen, wie Kabel oder Rohre durch den Dämmstoff verlegt werden müssen und dampfsperrenseitig austreten, wobei die Dampfsperre in diesem Bereich durchbrochen wird.

Um diese sozusagen undichte Stelle aus den genannten Gründen abzudichten, wird bislang die durchgesteckte Leitung bzw. der benachbarte Durchdringungsbereich mit Isolierband abgeklebt, was naturgemäß mit einem erheblichen Arbeitsaufwand verbunden ist. Trotzdem ist nicht gewährleistet, dass in jedem Fall eine vollständige Abdichtung erfolgt, zumal es problematisch ist, das streifenförmige Isolierband so um den meist runden Leitungsbereich dicht zu verkleben.

Der vorliegenden Erfindung liegt daher die Aufgabe zugrunde, eine Durchführeinrichtung der gattungsgemäßen Art so auszubilden, dass sie einfach und schnell montierbar und eine sichere Abdichtung im Durchführungsbereich der Dampfsperre zwischen dieser und der Leitung gewährleistet ist.

Diese Aufgabe wird durch eine Durchführeinrichtung gelöst, die die Merkmale des Anspruchs 1 aufweist.

Durch diese konstruktive Ausbildung wird eine sehr einfache, gleichwohl überaus wirkungsvolle Abdichtung im Durchdringungsbereich der Leitung durch die Dampfsperre erreicht.

Dabei kann zunächst die Leitung, beispielsweise ein Stromkabel, ein Abluft-, ein Heizungs- oder Wasserrohr vorverlegt sein, sodass die Durchführeinrichtung mit ihrer Kabeltülle auf diese Leitung aufgeschoben und anschließend mit der Dampfsperre verbunden werden kann.

Grundsätzlich denkbar ist aber auch, die Durchführeinrichtung vorab mit der Dampfsperre zu verbinden und anschließend die Leitung von außen her durch die Tülle und durch den Dämmstoff zu führen.

Die dampfdichte Abdichtung der Tülle kann durch geeignete Auswahl des elastischen Tüllen-materials erreicht werden, wobei ein solches denkbar ist, das eine hohe Elastizität aufweist, beispielsweise Gummi oder ein geeigneter Kunststoff.

Denkbar ist aber auch, die Tülle selbst aus einem härteren, weniger elastischen Material zu fertigen und im Berührungsbereich mit der Leitung, beispielsweise am freien Ende der Tülle mit einer elastischen Dichtung zu versehen, z.B. in Form eines Dichtungsringes.

Eine weitere Ausführungsvariante kann so ausgebildet sein, dass das freie Tüllenende als Quetschverschraubung ausgebildet ist, wobei dann auf den im Sinne achsparalleler Segmente ausgebildeten Endbereich eine Schraube aufschraubbar ist, durch den die Segmente dichtend an die Leitung angepresst werden. Dies bietet sich dann an, wenn der Leitungsquerschnitt relativ klein ist, z.B. bei einem Stromkabel.

Erfindungsgemäß schließt sich an die Tülle ein umlaufender Kragen an, der auf der Dampfsperre aufliegt, wobei am kragen auf der der Auflageseite gegenüberliegenden Seite eine ringförmige Klebfolie festgeklebt ist, die den Kragen umlaufend seitlich überragt und mit der der Kragen an der Dampfsperre zuklebbar ist.

Ferner sieht ein Ausführungsbeispiel vor, dass die Klebschicht mit einer Schutzfolie versehen ist, die erst kurz vor dem Aufkleben auf die Dampfsperre entfernt wird.

Eine Durchführeinrichtung nach der Erfindung kann als konfektioniertes Teil hergestellt sein, wobei durchaus die Möglichkeit besteht, die Tülle und den Kragen jeweils als separate Teile auszubilden, die in geeigneter Weise, beispielsweise durch Verschrauben miteinander verbindbar sind.

Diese Möglichkeit bietet den Vorteil, dass für unterschiedliche Tüllengrößen, die abhängig sind von den durchzuführenden Leitungen, die gleichen Kragen Verwendung finden, was sowohl eine einfache Herstellung als auch eine kostengünstige Bevorratung ermöglicht.

Weitere vorteilhafte Ausbildungen sind in den Unteransprüchen gekennzeichnet.

Ein Ausführungsbeispiel der Erfindung wird anhand der beigefügten Zeichnungen beschrieben.

Es zeigen:
- Figur 1: eine erfindungsgemäße Durchführeinrichtung in montierter Stellung in einer geschnittenen Seitenansicht
- Figur 2: die Durchführeinrichtung als Einzelheit, ebenfalls in einer geschnittenen Seitenansicht.

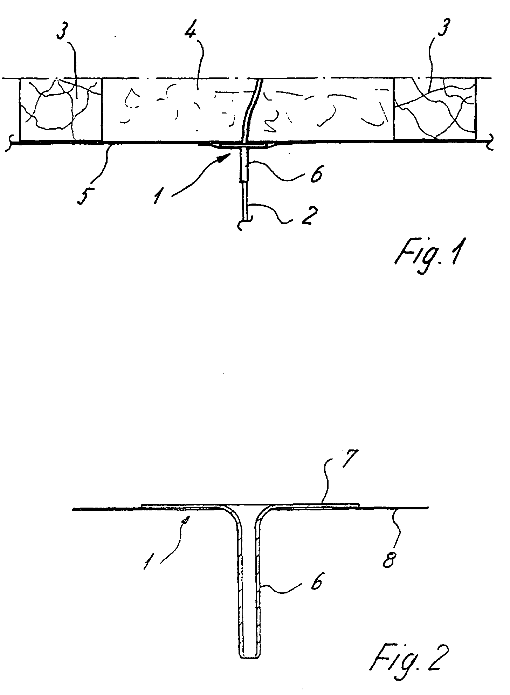

In den Figuren ist eine Durchführeinrichtung 1 für eine Leitung, im vorliegenden Ausführungsbeispiel gemäß der Figur 1 ein Kabel 2, durch einen mit einer Dampfsperre 5 versehenen Dämmstoff 4 dargestellt, der zwischen zwei Sparren 3 angeordnet ist, wobei die Dampfsperre 5 mit den Sparren 3 verbunden ist und den Dämmstoff 4 abdeckt.

Durch den Dämmstoff 4 ist das Kabel 2 geführt und durchtritt die Dampfsperre 5.

Wie insbesondere die Figur 2 sehr deutlich zeigt, besteht die Durchführeinrichtung 1 aus einer Tülle 6, an die sich ein mit der Dampfsperre 5 verbundener Kragen 7 anschließt.

Die Verbindung des Kragens 7 mit der Dampfsperre 5 erfolgt hierbei über eine ringförmige Klebefolie 8, die sowohl auf dem Rand des Kragens 7 als auch auf der Dampfsperre 5 klebend aufliegt. Hierdurch wird eine dampfdichte Verbindung zwischen der Durchführeinrichtung 1 und der Dampfsperre 5 hergestellt.

Das freie Ende der Tülle 6, durch die das Kabel 2 geführt ist, ist so ausgebildet, dass es dampfdicht an dem Kabel 2 anliegt.

Vorzugsweise ist die Durchführeinrichtung 1 aus Kunststoff hergestellt, der zumindest im Dichtbereich der Tülle 6 mit dem Kabel 2 elastisch ist und aufgrund dieser Elastizität an dem Kabel 2 anliegt.

Wie bereits erwähnt, ist die Durchführeinrichtung 1 für alle Arten von Leitungen geeignet. Also neben dem genannten Kabel 2 auch für Abluft-, Abwasser-, Wasseroder Heizungsrohre.

## Patentansprüche

1. Durchführeinrichtung zum Durchführen einer Leitung durch einen mit einer Dampfsperre (5) versehenen Dämpfstoff (4), mit einer aus einem elastischen Material bestehenden Tülle, die bei Gebrauch zumindest in einem Teilbereich dampfdicht an der Leitung anliegt und an die sich ein mit einer Seite auf der Dampfsperre (5) auflegbarer und mit dieser dampfdicht verbindbarer Kragen (7) anschließt, **dadurch gekennzeichnet, daß** am Kragen (7), auf der der Auflageseite gegenüberliegenden Seite, eine ringförmige Klebefolie (8) festgeklebt ist, die den Kragen (7) seitlich umlaufend überragt und mit der der Kragen (7) an der Dampfsperre (5) anklebbar ist.

2. Durchführeinrichtung nach Anspruch 1, **dadurch gekennzeichnet, daß** die Tülle (6) aus Gummi besteht.

3. Durchführeinrichtung nach Anspruch 1, **dadurch gekennzeichnet, daß** die Tülle (6) im Bereich der Anlage an der Leitung mit einem Dichtring versehen ist.

4. Durchführeinrichtung nach Anspruch 1, **dadurch gekennzeichnet, daß** die Tülle (6) im Bereich der Anlage mit der Leitung als Quetschverschraubung ausgebildet ist.

5. Durchführeinrichtung nach Anspruch 1, **dadurch gekennzeichnet, daß** die Tülle (6) und der Kragen (7) als separate Teile ausgebildet sind, die miteinander dampfdicht verbindbar sind.

6. Durchführeinrichtung nach Anspruch 5, **dadurch gekennzeichnet, daß** die Tülle (6) und der Kragen (7) miteinander verschraubt sind.

## Claims

1. Bushing device for passing a cable through a damping substance (4) which is provided with a vapour barrier (5), having a grommet which is composed of an elastic material, which rests in a vapour-type manner on the cable at least in one subarea during use and to which a collar (7) is connected, one face of which can be placed on the vapour barrier (5) and can be connected to it in a vapour-type manner, **characterized in that** an annular adhesive film (8) is firmly adhesively bonded to the face of the collar (7) which is opposite the contact face, overhangs the collar (7) of the sides all the way round, and by means of which the collar (7) can be adhesively bonded to the vapour barrier (5).

2. Bushing device according to Claim 1, **characterized in that** the grommet (6) is composed of rubber.

3. Bushing device according to Claim 1, **characterized in that** the grommet (6) is provided with a sealing ring in the area where it makes contact with the cable.

4. Bushing device according to Claim 1, **characterized in that** the grommet (6) is in the form of a pinched screw union in the area where it makes contact with the cable.

5. Bushing device according to Claim 1, **characterized in that** the grommet (6) and the collar (7) are formed as separate parts, which can be connected to one another in a vapour-type manner.

6. Bushing device according to Claim 5, **characterized in that** the grommet (6) and the collar (7) are screwed to one another.

## Revendications

1. Dispositif de traversée pour faire passer une conduite à travers une matière évaporable (4) pourvue d'une barrière de vapeur (5), avec une douille constituée d'une matière élastique qui à l'usage s'applique contre la conduite de manière étanche à la vapeur, au moins dans une zone partielle, et à laquelle se raccorde une collerette (7) pouvant être placée par un côté sur la barrière de vapeur (5) et qui peut être reliée à celle-ci de manière étanche à la vapeur, **caractérisé en ce que** sur la collerette (7), sur le côté opposé au côté de support, est collée fixement une feuille adhésive (8) de forme annulaire qui dépasse périphériquement sur le côté de la collerette (7) et au moyen de laquelle la collerette (7) peut être collée sur la barrière de vapeur (5).

2. Dispositif de traversée selon la revendication 1, **caractérisé en ce que** la douille (6) est en caoutchouc.

3. Dispositif de traversée selon la revendication 1, **caractérisé en ce que** la douille (6) est pourvue, dans la zone du contact avec la conduite, d'une bague d'étanchéité.

4. Dispositif de traversée selon la revendication 1, **caractérisé en ce que** la douille (6) est réalisée en tant que vissage serti, dans la zone du contact avec la conduite.

5. Dispositif de traversée selon la revendication 1, **caractérisé en ce que** la douille (6) et la collerette (7) sont réalisées en tant qu'éléments séparés qui peuvent être reliés entre eux de manière étanche à la vapeur.

6. Dispositif de traversée selon la revendication 5, **caractérisé en ce que** la douille (6) et la collerette (7) sont vissées entre elles.
